# EUROPEAN PATENT SPECIFICATION

(11) **EP 0 933 570 B1**
(45) Date of publication and mention of the grant of the patent: **26.02.2003**
(21) Application number: 98114151.8
(22) Date of filing: 29.07.1998
(51) Int. Cl.: F16K 15/06

(54) **Drying system with a low profile discharge check valve**
Trocknungsvorrichtung mit einem Rückschlagventil mit geringer Bauhöhe
Système de sèchage avec une soupape de non-retour à profil bas

(30) Priority: 02.02.1998 US 17247
(43) Date of publication of application: 04.08.1999
(73) Proprietor: Westinghouse Air Brake Company, Wilmerding, PA 15148-0001 (US)
(72) Inventor: Jones, Charlie E., Greenville, South Carolina 29615 (US); Kazakis, Michael V., Simpsonville, South Carolina 29681 (US); Dossaji, Murtaza R., Spartanburg, South Carolina 29301 (US)
(74) Representative: Petri, Stellan

(56) References cited:
- EP-A- 0 298 281
- DE-A- 4 342 577
- DE-U- 1 928 312
- GB-A- 1 122 954

## Description

### CROSS-REFERENCE TO RELATED APPLICATION

The invention disclosed in this application is related to the inventions taught in U.S. Patent 5.961.698, titled "Twin Tower Air Dryer", and U.S. Patent 5.901.464, titled "E-1 Twin Tower Air Dryer For An Air Compressor".

### FIELD OF INVENTION

The present invention relates generally to check·valves having a low profile for compactness, and is particularly suitable for use in air dryers of the type disclosed in the above patents Twin drying towers are generally known in the art.

### BACKGROUND OF THE INVENTION

All such dryers discharge dry pressurized air to systems utilizing such air, which systems often include main reservoirs that store the air for use by such systems. Dry air is discharged from the dryers through a check valve, and the valve remains closed when discharge air is not available to open the valve. The purpose of such a valve is to seal an air compressor and air dryer from the pressure contained within the main reservoir when the compressor is idle and to prevent any loss of main reservoir pressure (MRP) through the compressor. In the first of the U.S. patents cited above, it is an objective to make such an air dryer as compact as possible since ample space is not always available for containing dryers.

Check valves have long been employed in a variety of fields. As it may aid the reader to understand the invention disclosed infra, the following reference is offered as background art EP-A-0298281 discloses a check valve 1 having a tubular housing 2, a piston 5 and a spring 6.The housing 2 defines no other parts besides an inlet 3 and an outlet 4 that are axially aligned. The housing 2 features an internal annular seat 7 against which the head of the piston 5 is biased by the spring 6. This seat 7, however, is part of the housing 2. As long as the pressure acting on the head of the piston 5 is kept below a threshold level, the inlet 3 remains closed off from the outlet 4.

### OBJECTS OF THE INVENTION

Thus, an objective of the invention is to seal a compressor and air dryer from main reservoir pressure when the compressor is turned off, and not to allow the loss of main reservoir pressure through the compressor. This objective is obtained by use of a compact, low profile check valve that requires a minimum amount of space in the equipment and environment in which it is used.

### SUMMARY OF THE INVENTION

A system using pressurized air and a check valve deployed in said system is defined in claim 1.

The check valve of the present invention has a shallow housing containing a relatively shallow piston and a biasing spring. The face of the valve is provided with a seal, such as an O-ring, that seats and seals against a fixed surface of an associated structure to which the valve is attached or located within. When seated against this fixed surface, the piston closes off an inlet port. When pressure is introduced at the inlet port, however, the piston unseats and allows air to flow through the check valve from the inlet port to and out of flow openings defined in the housing.

The check valve, in addition, can be provided with inner ports defined through an outer side wall of the housing to provide fluid communication with control components in the system within which the check valve is installed. When the check valve is opened the pressurized air also flows through these inner ports, and through radial ports defined in the structure, to the control components of the system or systems using such air.

When no positive pressure is applied to the face of the piston, back pressure from the system using the air forces the piston against the fixed surface so that pressure does not leak from the system. A small spring located in the housing can assist in such sealing function.

### THE DRAWINGS

The invention, along with its objectives and advantages, will be better understood from consideration of the following detailed description and the accompanying drawings in which:
Figure 1 is a sectional view of the low profile valve of the invention,
Figure 2 is an exploded view of the valve of Figure 1, and
Figure 3 is a schematic view of the valve connected to two shuttle valves in a twin tower desiccant dryer system.

### PREFERRED EMBODIMENT OF THE INVENTION

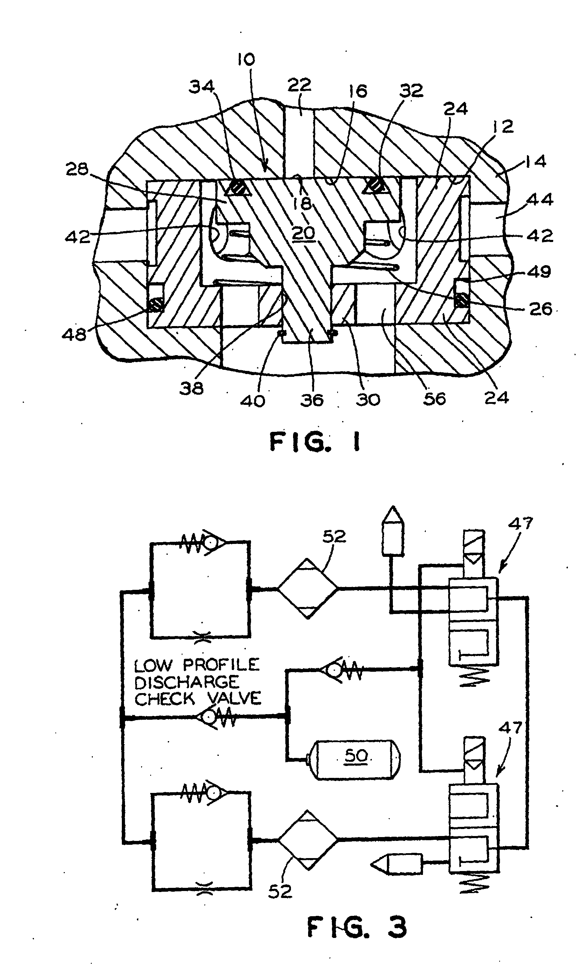

Referring now to the drawings, Figure 1 of which shows a shallow, low profile check valve 10 which, in Figure 1, is shown located in a shallow recess 12 of a structure 14. Structure 14 can, for example, be a manifold block of the type shown for a twin tower air dryer in U.S. Patent 5.961.698, though the invention is not limited thereto.

Structure 14 provides a fixed surface 16 against which a face 18 of a piston 20 of valve 10 is shown seated thereagainst (Figure 1). An inlet port 22 is provided in structure 14 in fluid communication with the face of the piston and with the interior of valve 10 when the piston moves away from fixed surface 16. An outlet port provided in structure 14 is in communication with a reservoir 50.

Valve 10 includes further a shallow housing 24 containing piston 20. A coil spring 26 is shown surrounding the piston and located between an enlarged section or flange 28 of the piston and the inner surface of lower wall portion 30 of the housing. The flange portion 28 of the piston provides a relatively broad face 18 having a dove tail groove 32 holding an O-ring 34 that protrudes from face 18.

In addition, piston 20 has an integral extension or stem 36 that extends into an opening 38 provided in lower wall 30 for axial, sliding movement therein. The opening and extension are sized to provide a close fit yet allow easy sliding of the extension 36 in the opening 38 and in contact with the surface of the opening. Preferably, the piston and its extension are made of a non-metallic material, such as Nylon or Teflon, which are self-lubricating so that extension 36 and opening 38 do not require further lubrication.

As seen in Figure 1, the distal end of extension 36 is located outside of valve housing 24 and beyond housing wall 30, and is provided with a ring 40, seated in the extension, that serves to retain the piston in the housing.

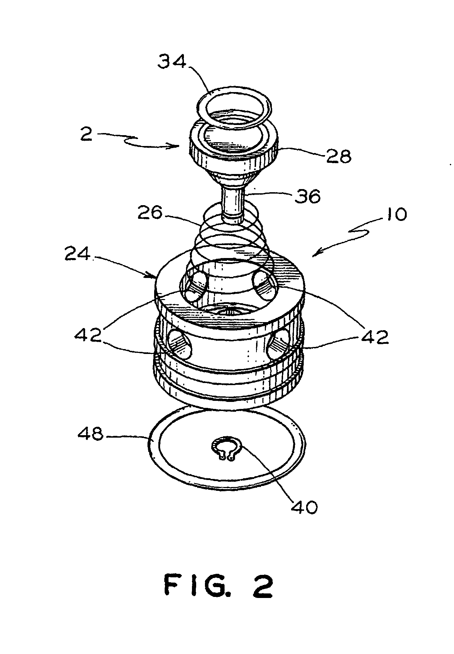

In Figure 2, four inner ports 42 are shown provided in the outer side wall of shallow housing 24. They align and communicate with the radial ports 44 defined within structure 14. The inner ports 42 and radial ports 44 can communicate, for example, with the control valves disclosed in U.S. Patent 5.901.464 to affect the switching of twin drying towers. These control valves are shown schematically in Figure 3, and are labelled by numeral 47.

A second O-ring 48 is provided for sealing valve housing 24 in and to structure 14. In Figure 1, the O-ring is shown seated in a peripheral groove 49 provided in the outside surface of the side wall of the housing.

Valve 10 functions in the following manner. When pressurized air is received in inlet port 22 of structure 14, a force is created on face 18 of piston 20, which moves the face from surface 16 and translates the body of the piston to wall 30 of piston housing 24. Piston extension 36, of course, moves through opening 38 in wall 30, and spring 26 compresses between the piston body and wall 30 of housing 24. The pressure in inlet port 22 can be that pressure supplied by an air compressor supplying dry air to a reservoir 50 (Figure 3), the air having been dried by desiccant assemblies 52. In Figure 1, such air flows through flow openings 56 provided in housing wall 30 to the reservoir 50 via the outlet port defined in structure 14.

When pressurized air is removed from the inlet port 22 in structure 14, such as when the air compressor is idle, pressure immediately builds up against the underside of flange 28. Previously built up in reservoir 50 while the check valve 10 was opened, this pressure now reaches the underside of piston 20 via the outlet port defined in structure 14 and the flow openings 56 defined in wall 30 of housing 24. Consequently, piston 20 moves upward causing the O-ring 34 on face 18 to effectively seal off inlet port 22. Spring 26 assists in closing the check valve 10.

The check valve 10 is a simple structure, easily and inexpensively made, and is a compact, shallow structure, as discussed above, requiring a minimum amount of space. The check valve functions well in its assigned tasks, as described above.

While a presently preferred embodiment for carrying out the instant invention has been set forth in detail, those persons skilled in the air valve art to which this invention pertains will recognize various alternative ways of practicing the invention without departing from the scope of the claims appended hereto.

## Claims

1. In combination, a system of using pressurized air and a check valve deployed in said system, said system including twin drying towers (52) upstream of said check valve and a reservoir (50) downstream of said check valve, with a source of pressure for controlling operation of said check valve such that (i) air from said source dries by flowing alternatingly through each of said twin drying towers (52) causing air dried thereby to both open and flow through said check valve to said reservoir (50) and (ii) an absence of air flowing from said source causes said check valve to close, said system also having control valves (47) for switching said twin drying towers (52) alternatingly between an air drying function and a desiccant purging function; said combination **characterized by**:
(a) said system having a structure (14) in which a shallow recess (12) is defined, said structure (14) also defining (i) an inlet port (22) for interconnection with said source of pressure, (ii) an outlet port for connection to said reservoir (50) and (iii) radial ports (44) for communicating with said control valves (47), with said shallow recess (12) being in communication with said inlet port (22), said outlet port and said radial ports (44); and
(b) said check valve (10) having a shallow housing (24), a piston (20) and a spring (26); said shallow housing (24) disposed in said shallow recess (12); said shallow housing (24) having a lower wall (30) that defines flow openings (56) for communicating with said reservoir (50) via said outlet port of said structure (14); said shallow housing (24) also defining inner ports (42) in communication with said radial ports (44) of said structure (14); said piston (20) capable of being moved axially in said shallow housing (24) yet biased therein by said spring (26) so that a face (18) of said piston (20) seats against a fixed surface (16) of said structure (14) thus placing said check valve (10) in a closed position wherein communication between said inlet port (22) and said flow openings (56) is cut off;
such that when air from said source is flowing through either of said twin drying towers (52) dried air flows into said inlet port (22) and acts against said face (18) causing said piston (20) to unseat thus forcing said check valve (10) to an open position wherein dried air continues flowing past said piston (20) through said flow openings (56) and said outlet port of said structure (14) to said reservoir (50) and through said inner and said radial ports (42, 44) to said control valves (47).

2. The system and the check valve (10) of claim 1 further **characterized by**:
(a) an annular groove (32) defined in said face (18) of said piston (20); and
(b) an o-ring (34) secured in said annular groove (32) for sealing said face (18) against said fixed surface (16) of said structure (14) so that air is prevented from leaking from said reservoir (50) when said check valve (10) is in said closed position.

3. The system and the check valve (10) of claim 1 further **characterized by**:
(a) a peripheral groove (49) defined in an outer side wall of said shallow housing (24); and
(b) an o-ring (48) secured in said peripheral groove (49) for sealing said shallow housing (24) in and to said structure (14).

4. The system and the check valve (10) of claim 1 further **characterized by**:
(a) said piston (20) having a stem (36);
(b) said lower wall (30) of said shallow housing (24) defining a stem opening (38) through which said stem (36) extends; and
(c) a retaining ring (40) secured around a distal end of said stem (36) that lies outside of said lower wall (30) for retaining said piston (20) in said shallow housing (24).

5. The system and the check valve (10) of claim 1 wherein said spring (26) is compressively disposed about said piston (20) between an underside of a flange (28) of said piston (20) and a top of said lower wall (30).

6. The system and the check valve (10) of claim 1 wherein said structure (14) of said system is a manifold block for said twin drying towers (52), said manifold block having said fixed surface (16) against which said face (18) of said piston (20) seals when said check valve (10) is closed.

## Patentansprüche

1. System des Einsatzes.von Druckluft und ein Rückschlagventil, das in dem System eingesetzt wird, in Kombination, wobei das System Doppel-Trockentürme (52) stromauf von dem Rückschlagventil und einen Vorratsbehälter (50) stromab von dem Rückschlagventil enthält, wobei eine Druckquelle die Funktion des Rückschlagventils so steuert, dass
1. Luft von der Quelle trocknet, indem sie abwechselnd durch jeden der Doppel-Trockentürme (52) strömt, was bewirkt, dass dadurch getrocknete Luft sowohl das Rückschlagventil öffnet als auch durch es hindurch zu dem Vorratsbehälter (50) strömt, und
2. ein Nichtvorhandensein von Luft, die von der Quelle strömt, bewirkt, dass sich das Rückschlagventil schließt, wobei das System des weiteren Steuerventile (47) aufweist, die die Doppel-Trockentürme (52) abwechseind zwischen einer Luft-Trockenfunktion und einer Trockenstoff-Spülfunktion umstellt, wobei die Kombination **dadurch gekennzeichnet ist, dass**:
a) das System eine Struktur (14) hat, in der eine flache Vertiefung (12) ausgebildet ist, wobei die Struktur (14) des weiteren
1. einen Einlasskanal (22) zur Verbindung mit der Druckquelle,
2. einen Auslasskanal zur Verbindung mit dem Vorratsbehälter (50), und
3. radiale Kanäle (44) zur Verbindung mit den Steuerventilen (47) aufweist, wobei die flache Vertiefung (12) mit der Einlassöffnung (22), der Auslassöffnung und den radialen Öffnungen (44) in Verbindung steht; und
b) das Rückschlagventil ein flaches Gehäuse (24), einen Kolben (20) und eine Feder (26) aufweist, wobei das flache Gehäuse (24) in der flachen Vertiefung (12) angeordnet ist und das flache Gehäuse (24) eine untere Wand (30) aufweist, die Strömungsöffnungen (56) zur Verbindung mit dem Vorratsbehälter (50) über den Auslasskanal der Struktur (14) aufweist und das flache Gehäuse (24) auch innere Kanäle (42) aufweist, die mit den radialen Kanälen (44) der Struktur (14) in Verbindung stehen, wobei der Kolben (20) in dem flachen Gehäuse (24) axial bewegt werden kann, darin jedoch durch die Feder (26) so gespannt wird, dass eine Stirnfläche (18) des Kolbens (20) an einer stationären Fläche (16) der Struktur (14) anliegt und so das Rückschlagventil (1) in eine geschlossene Position bringt, in der Verbindung zwischen dem Einlasskanal (22) und den Strömungsöffnungen (56) unterbrochen ist;
so dass, wenn Luft von der Quelle durch einen der Doppel-Trockentürme (52) strömt, getrocknete Luft in den Einlasskanal (22) strömt und auf die Stirnfläche (18) wirkt, so dass sich der Kolben (20) löst und so das Rückschlagventil (18) in eine offene Position drückt, in der getrocknete Luft weiter an dem Kolben (20) vorbei durch die Strömungsöffnungen und den Auslasskanal der Struktur (14) zu dem Vorratsbehälter (50) sowie durch die inneren und die radialen Kanäle (42, 44) zu den Steuerventilen (47) strömt.

2. System und Rückschlagventil (10) nach Anspruch 1, des weiteren **gekennzeichnet durch**:
a) eine Ringnut (32), die in der Stirnfläche (18) des Kolbens (20) ausgebildet ist, und
b) einen O-Ring (34), der in der Ringnut (32) befestigt ist, um die Stirnfläche (18) an der stationären Fläche (16) der Struktur (14) abzudichten, so dass verhindert wird, dass Luft aus dem Vorratsbehälter (50) austritt, wenn sich das Rückschlagventil (10) in der geschlossenen Position befindet.

3. System und Rückschlagventil (10) nach Anspruch 1, des weiteren **gekennzeichnet durch**:
a) eine Umfangsnut (49), die in einer Außenseitenwand des flachen Gehäuses (24) ausgebildet ist; und
b) einen O-Ring (48), der in der Umfangsnut (49) befestigt ist, um das flache Gehäuse (24) in und an der Struktur (14) abzudichten.

4. System und Rückschlagventil (10) nach Anspruch 1, des weiteren **gekennzeichnet**:
a) **dadurch**, dass der Kolben (20) einen Schaft (36) hat;
b) **dadurch**, dass die untere Wand (30) des flachen Gehäuses (24) eine Schaftöffnung (38) aufweist, durch die sich der Schaft (36) hindurch erstreckt; und
c) **durch** einen Haltering (40), der um ein vorderes Ende des Schaftes (36) herum befestigt ist, das außerhalb der unteren Wand (30) liegt, um den Kolben (20) in dem flachen Gehäuse (24) zu halten.

5. System und Rückschlagventil (10) nach Anspruch 1, wobei die Feder (26) zusammengedrückt um den Kolben (20) zwischen einer Unterseite eines Flansches (28) des Kolbens (20) und einem oberen Ende der unteren Wand (30) angeordnet ist.

6. System und Rückschlagventil (10) nach Anspruch 1, wobei die Struktur (14) des Systems ein Verteilerblock für die Doppel-Trockentürme (52) ist, wobei der Verteilerblock die stationäre Fläche (16) hat, an der die Stirnfläche (18) des Kolbens (20) abdichtet, wenn das Rückschlagventil (10) geschlossen ist.

## Revendications

1. En combinaison, un système mettant en oeuvre de l'air comprimé et un clapet de retenue déployé dans le système, le système comprenant des tours jumelles de séchage (52) placées en amont du clapet de retenue et un réservoir (50) placé en aval du clapet de retenue, avec une source de pression destinée à commander le fonctionnement du clapet de retenue de manière que (i) l'air de la source sèche par circulation en alternance dans chacune des tours jumelles de séchage (52) en provoquant l'ouverture du clapet de retenue par l'air ainsi séché et la circulation de celui-ci dans le clapet de retenue vers le réservoir (50), et (ii) l'absence d'air circulant depuis la source provoque la fermeture du clapet de retenue, le système ayant aussi des soupapes de commande (47) destinées à commuter les tours jumelles de séchage (52) en alternance entre une fonction de séchage d'air et une fonction de purge de matière déshydratante, la combinaison étant **caractérisée en ce que**:
(a) le système a une structure (14) dans laquelle une cavité peu profonde (12) est délimitée, la structure (14) délimitant aussi (i) un orifice d'entrée (22) destiné à être interconnecté à la source de pression, (ii) un orifice de sortie destiné à être connecté au réservoir (50), et (iii) des orifices radiaux (44) destinés à communiquer avec les soupapes de commande (47), la cavité peu profonde (12) étant en communication avec l'orifice d'entrée (22), l'orifice de sortie et les orifices radiaux (44), et
(b) le clapet de retenue (10) ayant un boîtier peu profond (24), un piston (20) et un ressort (26), le boîtier peu profond (24) étant disposé dans la cavité peu profonde (12), le boîtier peu profond (24) ayant une paroi inférieure (30) qui délimite des ouvertures (56) de circulation assurant la communication avec le réservoir (50) par l'intermédiaire de l'orifice de sortie de la structure (14), le boîtier peu profond (24) délimitant aussi des orifices internes (42) qui communiquent avec les orifices radiaux (44) de la structure (14), le piston (20) pouvant être déplacé axialement dans le boîtier peu profond (24) tout en étant rappelé à l'intérieur par le ressort (26) de manière qu'une face (18) du piston (20) soit appliquée contre une surface fixe (16) de la structure (14) et place ainsi le clapet de retenue (10) en position de fermeture lorsque la communication est interrompue entre l'orifice d'entrée (22) et les ouvertures de circulation (56),
si bien que, lorsque de l'air de la source circule dans l'une des tours jumelles de séchage (52), l'air séché s'écoule dans l'orifice d'entrée (22) et agit contre la face (18) en provoquant la séparation du piston (20) de son siège et en chassant ainsi le clapet de retenue (10) vers une position d'ouverture dans laquelle l'air séché continue à circuler le long du piston (20) par les ouvertures de circulation (56) et l'orifice de sortie de la structure (14) vers le réservoir (50) et par l'orifice interne et les orifices radiaux (42, 44) vers les soupapes de commande (47).

2. Système et clapet de retenue (10) selon la revendication 1, **caractérisés en outre par** :
(a) une gorge annulaire (32) délimitée dans ladite face (18) du piston (20), et
(b) un joint torique (34) fixée dans la gorge annulaire (32) afin qu'il assure l'étanchéité entre ladite face (18) et la surface fixe (16) de la structure (14) et que l'air ne puisse pas s'échapper du réservoir (50) lorsque le clapet de retenue (10) est en position de fermeture.

3. Système et clapet de retenue (10) selon la revendication 1, **caractérisés en outre par** :
(a) une gorge périphérique (49) délimitée dans une paroi latérale externe du boîtier peu profond (24), et
(b) un joint torique (48) fixé dans la gorge périphérique (49) afin qu'il assure l'étanchéité du boîtier peu profond (24) dans la structure (14) et sur celle-ci.

4. Système et clapet de retenue (10) selon la revendication 1, **caractérisés en ce que** :
(a) le piston (20) a une tige (36),
(b) la paroi inférieure (30) du boîtier peu profond (24) délimite l'ouverture (38) de la tige pour le passage de la tige (36), et
(c) une bague de retenue (40) est fixée autour d'une extrémité externe de la tige (36) qui est en dehors de la paroi inférieure (30) afin que le piston (20) soit retenu dans le boîtier peu profond (24).

5. Système et clapet de retenue (10) selon la revendication 1, dans lesquels le ressort (26) est disposé sous forme comprimée autour du piston (20) entre une face inférieure d'un flasque (28) du piston (20) et une partie supérieure de la paroi inférieure (30).

6. Système et clapet de retenue (10) selon la revendication 1, dans lesquels la structure (14) du système est un bloc collecteur destiné aux tours jumelles de séchage (52), le bloc collecteur ayant une surface fixe (16) contre laquelle ladite face (18) du piston (20) est en coopération étanche lorsque le clapet de retenue (10) est fermé.
